# EUROPÄISCHE PATENTSCHRIFT

(11) **EP 0 742 648 B1**
(45) Veröffentlichungstag und Bekanntmachung des Hinweises auf die Patenterteilung: **27.09.2006**
(21) Anmeldenummer: 96106925.9
(22) Anmeldetag: 02.05.1996
(51) Int. Cl.: H04B 3/23, H04M 7/00, H04M 3/00

(54) **Verfahren und Einrichtung zur Echokompensatorenanschaltung für Fernsprechverbindungen**
Method and apparatus to connect echo cancellers for telephone links
Procédé et appareil pour la connexion d'un annuleur d'écho à des liaisons téléphoniques

(30) Priorität: 12.05.1995 DE 19517574
(43) Veröffentlichungstag der Anmeldung: 13.11.1996
(73) Patentinhaber: SIEMENS AKTIENGESELLSCHAFT, 80333 München (DE)
(72) Erfinder: Edlinger, Helmut, Ing., 82061 Neuried (DE); Müller, Hans-Peter, Dipl.-Ing., 81735 München (DE)

(56) Entgegenhaltungen:
- EP-A- 0 511 094
- US-A- 4 881 221
- US-A- 5 029 204
- PATENT ABSTRACTS OF JAPAN vol. 018, no. 038 (E-1495), 20. Januar 1994 (1994-01-20) & JP 05 268121 A (FUJITSU LTD), 15. Oktober 1993 (1993-10-15)
- PATENT ABSTRACTS OF JAPAN vol. 1995, no. 06, 31. Juli 1995 (1995-07-31) & JP 07 075140 A (NIPPON TELEGR & TELEPH CORP), 17. März 1995 (1995-03-17)

## Beschreibung

Die Erfindung betrifft ein Verfahren zur Echokompensatorenanschaltung für Fernsprechverbindungen in einem Telekommunikationsnetz, das eine Mehrzahl von Netzgruppen mit jeweils mindestens einem Fernknoten und einer Mehrzahl von Teilnehmerstellen hat, die mit dem Fernknoten über Netzgruppenleitungen verbunden sind, wobei die Größe der Netzgruppen so gewählt ist, daß bei den innerhalb einer Netzgruppe maximal auftretenden Signallaufzeiten eine Echokompensation nicht erforderlich ist, und wobei die Fernknoten verschiedener Netzgruppen durch Fernleitungen miteinander verbunden sind.

Bei weiträumigen (internationalen und interkontinentalen) Kommunikationsnetzen sind für Sprachverbindungen ab einer vorgegebenen Signallaufzeit, die im allgemeinen 25 ms beträgt, Echokompensatoren vorzusehen, die das durch die Sprachendgeräte bzw. durch den Vierdraht/Zweidraht-Übergang entstehende Echo verhindern bzw. dämpfen. Bei der betrachteten Signallaufzeit sind nicht nur die durch die Länge der Übertragungsstrecke bedingten Laufzeiten, sondern auch die durch digitale Vermittlungs- und Multiplexeinrichtungen und die Teilnehmeranschlußtechnik entstehenden Zeitverzögerungen zu berücksichtigen.

In den bisherigen öffentlichen Telekommunikationsnetzen sind in den Fernleitungen Echokompensatoren fest installiert. Da für digitale Datenübertragung eine Echokompensation nicht zulässig ist, erfolgt ferner eine Bündeltrennung zwischen Leitungen für die Sprachübertragung und Leitungen für die Datenübertragung, so daß man zwischen zwei Fernvermittlungsstellen maximal vier Bündel benötigt.

In privaten Netzen ist wegen der geringeren Leitungs- oder Kanalanzahl eine Bündeltrennung nicht immer möglich oder wirtschaftlich sinnvoll. Ferner ist es nicht zweckmäßig, in den für private Netze vorgesehenen Vermittlungsstellen Echokompensatoren fest vorzusehen, da in privaten Netzen unter Umständen nur eine geringe Anzahl von Vermittlungsstellen für die Übertragung von Sprache über große Entfernungen benötigt wird.

Telekommunikationsnetzte, in denen die den Fernleitungen zugeordneten Echokompensatore wahlweise einschleifbar sind, sind z.B. aus JP05268121, JP 07075140, US 4881221, US 5029204 bekannt.

Der Erfindung liegt die Aufgabe zugrunde, ein Verfahren der eingangs genannten Art anzugeben, mit dem mit minimalem technischen und wirtschaftlichen Aufwand auch in privaten Netzen in Fernverbindungen eine Echokompensation erfolgen kann. Diese Aufgabe wird durch die Merkmale der unabhängigen Ansprüche gelöst. Erfindungsgemäß bedeutet das, daß bei Aufbau einer Fernsprechverbindung zwischen zwei Netzgruppen in dem jeweiligen Fernknoten der Ursprungsnetzgruppe und der Zielnetzgruppe ein Echokompensator in die Verbindung eingeschleift wird. Im Gegensatz zu den bekannten Lösungen sind bei dem erfindungsgemäßen Verfahren die Echokompensatoren nicht fest den Fernleitungen zugeordnet, sondern werden verbindungsindividuell, d.h. bei Bedarf in die aufzubauende Fernverbindung eingeschleift.

Für die Entscheidung, ob ein Echokompensator einzuschleifen ist oder nicht, kann hierbei die Leitweginformation für den Verbindungsaufbau ausgewertet werden. Wird anhand der Leitweginformation festgestellt, daß eine Fernsprechverbindung von einer Netzgruppe zu einer anderen Netzgruppe erfolgen soll, werden in der Vermittlungsstelle der Ursprungsnetzgruppe und der Vermittlungsstelle der Zielnetzgruppe Echokompensatoren in die Verbindung eingeschleift.

Da eine Echokompensation nur bei einer Sprachübertragung benötigt wird, kann ferner ein die Art der zu übertragenden Information (Sprachübertragung, Datenübertragung) kennzeichnendes Signal ausgewertet werden, so daß der jeweilige Echokompensator nur bei einer beabsichtigten Sprachübertragung eingeschleift wird. Damit läßt sich eine Bündeltrennung für Sprachübertragung einerseits und Datenübertragung andererseits vermeiden. Dieselben Leitungen können sowohl für Sprachübertragung als auch für Datenübertragung verwendet werden.

Die Erfindung betrifft ferner eine Echokompensatorenanschaltung, insbesondere zur Durchführung des vorstehend beschriebenen Verfahrens gemäß dem Oberbegriff des Anspruchs 4, bei der erfindungsgemäß jedem Fernknoten mindestens ein Echokompensator zugeordnet ist, der beim Aufbau einer Fernsprechverbindung zwischen Teilnehmern in unterschiedlichen Netzgruppe wahlweise zwischen einen fernleitungsseitigen Anschluß und einen netzgruppenseitigen Anschluß der Vermittlungseinrichtung des Ursprungsfernknotens und des Zielfernknotens einschleifbar ist.

Die Anzahl der benötigten Echokompensatoren richtet sich nach dem errechneten oder anderweitig ermittelten Bedarf. Vorzugsweise ist eine Mehrzahl von Echokompensatoren zu einem mehrkanaligen Bündel zusammengefaßt, dessen netzgruppenseitiger Anschluß und dessen fernleitungsseitiger Anschluß jeweils mit einem mehrkanaligen Anschluß der Vermittlungseinrichtung verbindbar ist. Beispielsweise kann das Echokompensatorbündel 30 Sprachübertragungskanäle haben, und an PCM30-Anschlüssen der Vermittlungseinrichtung angeschlossen sein. Die Entscheidung, ob der Echokompensator zugeschaltet wird oder nicht wird von der Datenverarbeitungseinrichtung innerhalb der Vermittlungseinrichtung getroffen. Diese wertet die Leitweginformation zum Aufbau der Fernsprechverbindung aus und ist so programmiert, daß bei Aufbau einer die Netzgruppe verlassenden Fernsprechverbindung der teilnehmerseitige Anschluß über das Koppelfeld der Vermittlungseinrichtung mit dem netzgruppenseitigen Anschluß des Echokompensators verbunden wird. Der fernleitungsseitige Anschluß des Echokompensators wird dann über das Koppelfeld der Vermittlungseinrichtung mit der Fernleitung verbunden.

In der Vermittlungseinrichtung werden also folgende Auswahlkriterien bewertet:
Ein Echokompensator wird nicht eingeschleift bei Datenverbindungen, Transitsprachverbindungen und Sprachverbindungen innerhalb der eigenen Netzgruppe.
Ein Echokompensator wird eingeschleift bei abgehendem Fernverkehr in eine fremde Netzgruppe für Sprachverbindungen sowie bei ankommendem Fernverkehr von einer fremden Netzgruppe für Sprachverbindungen.

Die wesentlichen Vorteile des erfindungsgemäßen Verfahrens zur Echokompensatorenanschaltung sind, daß handelsübliche digitale Echokompensatoren verwendet werden können, daß keine Kompensatorsteuerung über die mit dem Kompensator verbundenen Anschlüsse der Vermittlungseinrichtung erforderlich ist und daß das Programm der Datenverarbeitungseinrichtung der Vermittlungseinrichtung nicht verändert zu werden braucht. Die in der Vermittlungseinrichtung ohnehin benutzte Wahlbewertungsprozedur wird für die Entscheidung verwendet, ob ein Echokompensator einzuschleifen ist oder nicht. Durch die wahlweise verbindungsindividuelle Zuschaltung eines Echokompensators kann man auf eine Bündeltrennung verzichten, was insbesondere in privaten Netzen mit einer oft nur beschränkten Anzahl von Leitungen zwischen zwei Fernknoten von Bedeutung ist.

Die folgende Beschreibung erläutert in Verbindung mit den beigefügten Zeichnungen die Erfindung anhand eines Ausführungsbeispieles. Es zeigen:
- Fig. 1: eine schematische Darstellung eines Telekommunikationsnetzes mit über Fernleitungen miteinander verbundenen Netzgruppen,
- Fig. 2: eine schematische Darstellung einer Netzgruppe mit ihren Fernleitungsanschlüssen und einem zugehörigen Echokompensator,
- Fig. 3: eine schematische Darstellung einer Vermittlungseinrichtung in einem Fernknoten zur Erläuterung des Einschleifens des Echokompensators und
- Fig. 4 bis 6: jeweils eine schematische Darstellung des Verbindungsaufbaus mit Echokompensation in der Ursprungsvermittlungseinrichtung und der Zielvermittlungseinrichtung.

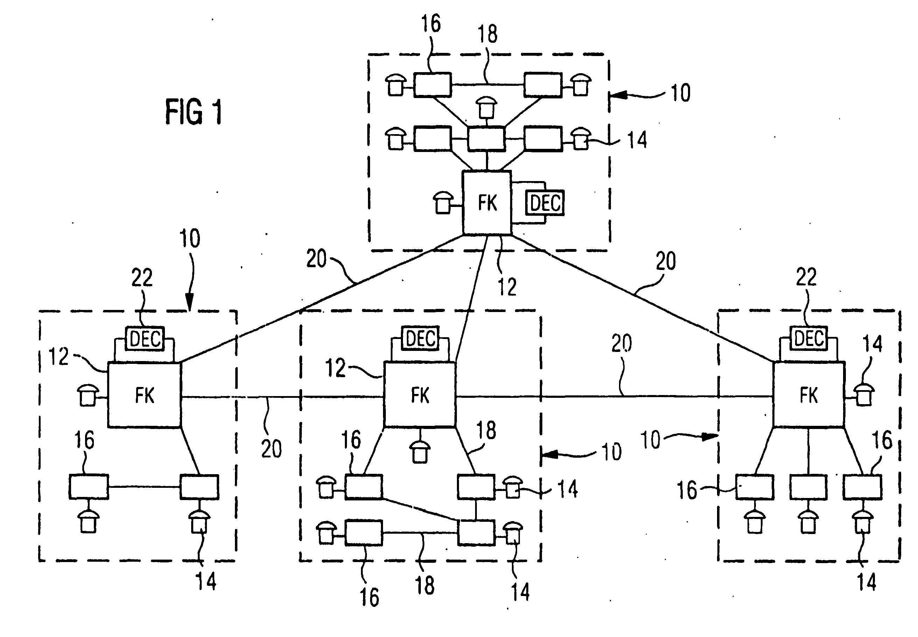

Das in Fig. 1 dargestellte Telekommunikationsnetz umfaßt eine Mehrzahl von Netzgruppen 10, die jeweils durch ein gestricheltes Viereck dargestellt sind. Jede Netzgruppe hat mindestens einen Fernknoten 12 mit einer Vermittlungseinrichtung, an die Teilnehmerstellen oder Endgeräte 14 und/oder weitere Vermittlungen 16 angeschlossen sind, die ihrerseits wieder mit Teilnehmerstellen oder Endgeräten 14 verbunden sind. Bei den Vermittlungseinrichtungen kann es sich beispielsweise um Systeme des Typs Hicom der Anmelderin handeln. Die Teilnehmerstellen 14 und Vermittlungseinrichtungen 16 sind mit dem Fernknoten 12 und/oder untereinander innerhalb der Netzgruppe 10 durch Netzgruppenleitungen 18 miteinander verbunden. Die Größe einer Netzgruppe 10 ist so bemessen, daß die maximal erreichten Signallaufzeiten unter Berücksichtigung der Signalbearbeitungszeiten unter dem Wert bleiben, ab dem eine Echokompensation erforderlich ist. Für Verbindungen innerhalb einer Netzgruppe werden daher keine Echokompensatoren benötigt.

Die Fernknoten 12 verschiedener Netzgruppen 10 sind über Fernleitungen 20 miteinander verbunden, wobei unter Fernleitung jede Art von Signalübertragungsstrecke unabhängig von der verwendeten Technologie zu verstehen ist. Es wird davon ausgegangen, daß die Signallaufzeiten für eine Verbindung zwischen zwei Endgeräten verschiedener Netzgruppen so lange sind, daß für Sprachverbindungen zwischen den Fernknoten 12 zweier verschiedener Netzgruppen 10 eine Echokompensation erforderlich ist. Für Datenübertragungen ist eine Echokompensation dagegen nicht zulässig. Um nun die gleichen Fernleitungen ohne Bündeltrennung sowohl für Sprachübertragungen als auch Datenübertragungen nutzen zu können, ist jeder Vermittlungseinrichtung eines Fernknotens 12 mindestens ein Echokompensator 22 zugeordnet, der beim Verbindungsaufbau wahlweise eingeschleift werden kann, wie dies im weiteren näher erläutert wird.

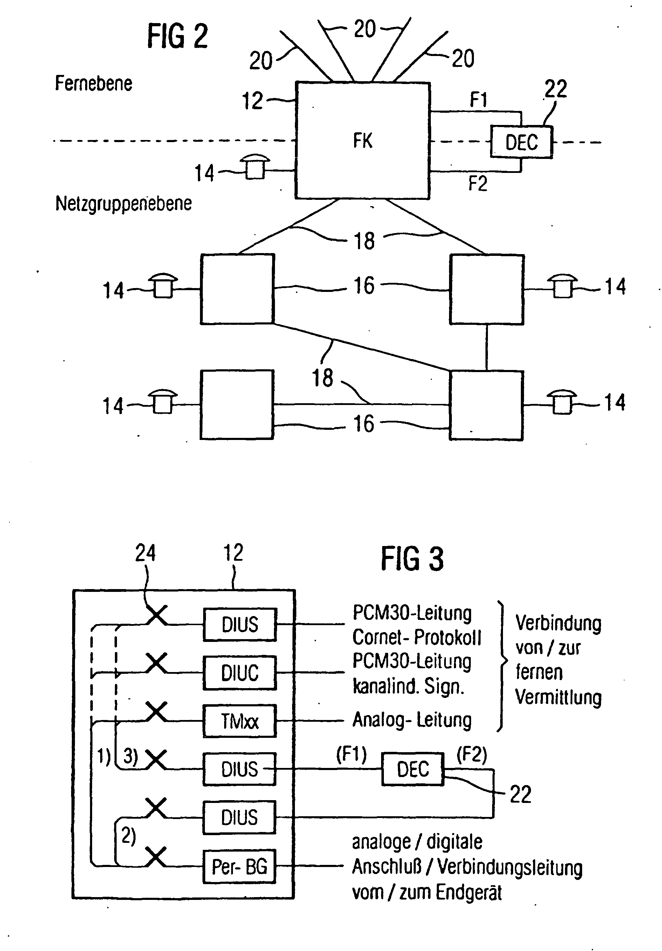

Fig. 3 zeigt in schematischer Weise die Vermittlungseinrichtung in einem Fernknoten 12 mit einem Koppelfeld 24 und einer Reihe von Anschlüssen; die hier nur als Beispiele und Möglichkeiten verstanden werden sollen. Dabei wurden folgende Abkürzungen verwendet:
DIUS (DIU = Digital Interface Unit) bezeichnet einen digitalen Mehrkanalanschluß (z.B. einen 2-Mbit/s-Anschluß) mit Zentralkanal-Signalisierung (Cornet-Protokoll),
DIUC bezeichnet einen digitalen Mehrkanalanschluß mit kanalzugeordneter Signalisierung,
TMxx bezeichnet einen Analoganschluß für Verbindungsleitungen (Netzgruppenleitungen, Fernleitungen),
DEC bezeichnet einen digitalen Echokompensator,
F1 bezeichnet den Anschluß des Echokompensators an eine Verbindungsleitung,
F2 bezeichnet den Anschluß des Echokompensators an den Endechoweg,
Per-BG bezeichnet eine Peripherie-Baugruppe.

Ferner sind in Fig. 3 drei Schaltwege durch das Koppelfeld eingezeichnet, die folgende Verbindungswege darstellen:
1. Verbindung ohne Echokompensation
2. Endgeräteseitige Verbindung mit Echokompensator
3. Verbindungsleitungsseitige Verbindung mit Echokompensator

Für die Echokompensation können handelsübliche digitale Echokompensatoren verwendet werden, die z.B. über 2-Mbit/s-Leitungen mit den DIUx-Baugruppen der Vermittlungseinrichtung verbunden sind. Da diese Echokompensatoren 30 Kanäle umfassen, sind sie tatsächlich ein Bündel oder ein Pool von Echokompensatoren. Aufgrund dieser Tatsache brauchen die Echokompensatoren über den 2-Mbit/s-Anschluß nicht schaltbar zu sein. Die konstruktive Unterbringung der Echokompensatoren kann in eigenen Aufnahmeeinrichtungen oder bei entsprechender Konstruktion auch in dem Gehäuse der Vermittlungseinrichtung erfolgen.

Eine vermittlungstechnische Signalisierung (kanalzugeordnete Signalisierung oder Zentralkanalsignalisierung) zwischen den DlUx-Anschlüssen und dem Echokompensator wird von diesem nicht benötigt. Die auf dem Signalisierungskanal gesendete Information (kanalzugeordnete oder Zentralkanalsignalisierung) wird unverändert vom Echokompensator zur anderen Seite weitergegeben.

Eine Fernsteuerung des Echokompensators entweder über die 2-Mbit/s-Strecke oder über eine DEC-Bedienschnittstelle ist bei der Poolanschaltung des Echokompensators nicht erforderlich, da generell alle 30 Kanäle des DEC eingeschaltet sind. Verbindungen, die keine Echokompensation benötigen, werden im Koppelfeld 24 direkt mit der gewünschten Verbindungsleitung zusammengeschaltet.

Wie man in Fig. 3 erkennt, kann der DEC-Pool an alle vorkommenden Anschluß- und Verbindungsleitungen unabhängig von der Übertragungs-, Signalisierungs- und Überwachungsart (analog/digital, kanalzugeordnete Signalisierung, Zentralkanalsignalisierung, mit oder ohne CRC4) angeschaltet werden.

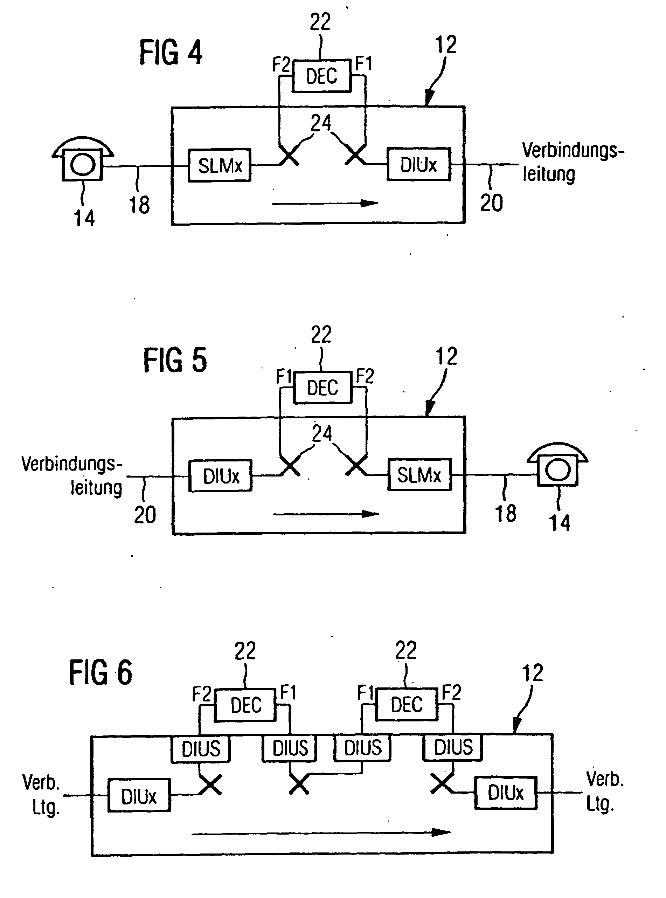

Unter Berücksichtigung der vorstehend beschriebenen Ausführungen wird unter Bezugnahme auf die Figuren 4, 5 und 6 im folgenden die Arbeitsweise der erfindungsgemäßen Echokompensatorenschaltung beschrieben. Dabei sind folgende Vorgaben zu berücksichtigen:
Echokompensatoren werden nur in Sprachverbindungen eingeschleift.

Die Unterscheidung von Sprach- und Datenverbindung erfolgt durch ein auswertbares Kennzeichen z.B. im Signalisierungsprotokoll.

In eine Fernverbindung wird nur ein Kompensatorenpaar seitenrichtig eingeschleift.

Ist bei einer abgehenden oder ankommenden Fernverbindung in dem betreffenden Ursprungs- oder Zielfernknoten kein Echokompensator frei, dann darf die Sprachverbindung nicht hergestellt werden.

Verbindungen innerhalb einer Netzgruppe werden ohne Echokompensation betrieben. Transitvermittlungseinrichtungen in einer Fernverbindung schleifen keine Echokompensatoren ein.

In Fernverbindungen werden unabhängig von der Signallaufzeit zwischen Nachbarnetzgruppen Echokompensatoren eingeschleift.

Wird aufgrund der Wahlinformation festgestellt, daß die Verbindung nur innerhalb der eigenen Netzgruppe hergestellt werden soll, so wird in dem Koppelfeld der Vermittlungseinrichtung diese Verbindung hergestellt, ohne den Echokompensator einzuschleifen. Wird ferner anhand der Signalisierung festgestellt, daß über die herzustellende Verbindung eine Datenübertragung erfolgen soll, so wird ebenfalls kein Echokompensator eingeschleift. Das Koppelfeld stellt eine Verbindung entlang des Weges 1 in Fig. 3 zwischen dem Endgerät und der anzuwählenden Fernleitung her.

In den Figuren 4 bis 6 bezeichnet der Pfeil die Richtung des Verbindungsaufbaus. Wird aufgrund der Wahlinformation festgestellt, daß eine Sprachverbindung die eigene Netzgruppe verlassen soll, so wird in der Ursprungsvermittlung die F2-Seite des Echokompensatorenbündels angesteuert (Fig. 3, Weg 2; linke Hälfte in Fig. 4) und über die F1-Seite die Verbindung demselben Fernknoten wieder zugeführt (Fig. 3, Weg 3; rechte Hälfte der Fig. 4). Durch die erneut erfolgende Wahlbewertung wird nun die betreffende Fernleitung angesteuert. Ist in dem Ursprungsfernknoten kein Echokompensator frei, so darf die Verbindung nicht hergestellt werden.

Bei Sprachverbindungen wird im Zielfernknoten die F1-Seite des Echokompensatorenbündels 22 angesteuert und über die F2-Seite die Verbindung dem Fernknoten wieder zugeführt (Fig. 3, Weg 3 und Weg 2; Fig. 5). Durch die erneut erfolgende Wahlbewertung wird nun die betreffende Netzgruppenleitung und der am Fernknoten direkt angeschaltete Teilnehmer angesteuert. Ist im ankommenden Fernknoten kein Echokompensator frei, so darf die Verbindung nicht hergestellt werden.

Werden im Zuge eines Verbindungsaufbaues weitere Fernknoten durchlaufen (Transitverkehr, Fig. 6) so unterbleibt in diesen Transitfernknoten das Einschleifen der Echokompensatoren. Die beiden Fernleitungen werden direkt über das Koppelfeld miteinander verbunden.

Wie bereits oben erwähnt wurde, ist eine Echokompensation bei der Datenübertragung nicht zulässig. Wird in der aufgebauten Verbindung von einer Sprachübertragung auf eine Datenübertragung umgeschaltet, so wird durch einen in dem Signalisierungsprotokoll übertragenen Befehl die Nutzkanalverbindung über den Echokompensator 22 aufgetrennt (Auftrennen der Verbindungen 2 und 3 in Fig. 3) und danach der Leitungseingang direkt mit dem Leitungsausgang zusammengeschaltet (Verbindung 1 in Fig. 3). Durch diese Maßnahme erübrigt sich eine Steuerung des Echokompensators über die 2-Mbit/s-Anschlüsse.

Bei bestimmten Netzkonfigurationen (d.h. entsprechend langen Signallaufzeiten zwischen Teilnehmern A und B) kann es erforderlich sein, daß sowohl für den A- als auch für den B-Teilnehmer die Echokompensatorenanschaltung im selben Fernknoten erfolgen muß. Über das Koppelfeld der Vermittlungseinrichtung können, wie schon oben beschrieben, zwei Echokompensatoren zu einem DEC-Paar zusammengeschaltet werden (Fig. 6).

## Patentansprüche

1. Verfahren zur Echokompensatorenanschaltung für Fernsprechverbindungen in einem Telekommunikationsnetz, das eine Mehrzahl von Netzgruppen (10) mit jeweils mindestens einem Fernknoten (12) und einer Mehrzahl von Vermittlungseinrichtungen (16) hat, die mit dem Fernknoten (12) über Netzgruppenleitungen (18) verbunden sind,
wobei die Größe der Netzgruppen (10) so gewählt ist, daß bei den innerhalb einer Netzgruppe (10) maximal auftretenden Signallaufzeiten eine Echokompensation nicht erforderlich ist, und
wobei die Fernknoten (12) verschiedener Netzgruppen (10) durch Fernleitungen (20) miteinander verbunden sind,
**dadurch gekennzeichnet,**
**daß** für eine Entscheidung, ob ein Echokompensator (22) einzuschleifen ist oder nicht, eine Leitweginformation für den Verbindungsaufbau und, im Signalisierungsprotokoll ein Kennzeichen über die Art der zu übertragenden Information ausgewertet wird und daß bei Aufbau einer Fernsprechverbindung zwischen zwei Netzgruppen (10) in dem jeweiligen Fernknoten (12) der Ursprungsnetzgruppe und der Zielnetzgruppe ein Echokompensator (22) in die Verbindung eingeschleift wird.

2. Einrichtung zur Echokompensatorenanschaltung für Fernsprechverbindungen in einem Telekommunikationsnetz, das eine Mehrzahl von Netzgruppen (10) mit jeweils mindestens einem eine Vermittlungseinrichtung umfassenden Fernknoten (12) und einer Mehrzahl von mit diesem über Netzgruppenleitungen (18) verbundenen Vermittlungseinrichtungen (16) hat, die mit dem Fernknoten (12) über Netzgruppenleitungen (18) verbunden sind, wobei die Größe der Netzgruppen so gewählt ist, daß bei den innerhalb einer Netzgruppe (10) maximal auftretenden Signallaufzeiten eine Echokompensation nicht erforderlich ist, und
wobei die Fernknoten (12) verschiedener Netzgruppen (10) durch Fernleitungen (20) miteinander verbunden sind,
**dadurch gekennzeichnet,**
**daß** jedem Fernknoten (12) mindestens ein Echokompensator (22) zugeordnet ist, der bei Aufbau einer Fernsprechverbindung zwischen Teilnehmern (14) in unterschiedlichen Netzgruppen (10) wahlweise zwischen einen fernleitungsseitigen Anschluß und einen netzgruppenseitigen Anschluß der Vermittlungseinrichtung des Ursprungsfernknotens und des Zielfernknotens einschleifbar ist und
**daß** eine Datenverarbeitungseinrichtung in der Vermittlungsstelle des Fernknotens so programmiert ist, daß sie eine Leitweginformation und ein Kennzeichen im Signalisierungsprotokoll über die Art der zu übertragenden Information auswertet und daß ein Einschleifen des Echokompensators (22) in Abhängigkeit des Auswertungsergebnisses erfolgt.

3. Einrichtung nach Anspruch 4,
**dadurch gekennzeichnet,**
**daß** mehrere Echokompensatoren zu einem mehrkanaligen Bündel zusammengefaßt sind, dessen netzgruppenseitiger Anschluß (F2) und dessen fernleitungsseitiger Anschluß (F1) jeweils über einen mehrkanaligen Anschluß (DIUS, DIUC) mit der Vermittlungseinrichtung verbindbar ist.

## Claims

1. Method for connecting echo cancellers for telephone connections in a telecommunications network which has a plurality of network groups (10) each with at least one remote node (12) and a plurality of switching devices (16) which are connected to the remote node (12) via network group lines (18),
with the size of the network groups (10) being selected so that no echo cancelling is required for the maximum signal delay times occurring within a network group (10) and
with the remote nodes (12) of different network groups (10) being connected to each other by trunk lines (20),
**characterized in that**
for a decision as to whether an echo canceller (22) is to be looped in or not, routing information for the connection setup and in the signalling protocol a flag about the type of information to be transmitted are evaluated, and that on setup of a telephone connection between two network groups (10) in the relevant remote node (12) of the originating network group and the destination network group, an echo canceller (22) is looped into the connection.

2. Device for connecting echo cancellers for telephone connections in a telecommunications network which has a plurality of network groups each with at least one remote node (12) comprising a switching device and a plurality of switching devices (16) connected to the remote node (12) via network group lines (18), with the size of the network group being selected so that no echo cancelling is necessary for the maximum signal delay times occurring within a network group (10) and
with the remote nodes (12) of different network groups (10) being connected to each other by trunk lines (20),
**characterized in that**,
each remote node (12) is assigned at least one echo canceller (22) which, when a telephone connection is set up between subscribers (14) in different network groups (10) can optionally be looped in between a trunk line-side port and a network group-side port of the switching device of the originating remote node and the destination remote node and that a data processing device in the exchange of the remote node is programmed so that it evaluates routing information and a flag in the signalling protocol about the type of information to be transmitted and that

3. Device in accordance with claim 4,
**characterized in that**,
a number of echo cancellers are grouped together into a multichannel bundle, of which the network group-side port (F2) and trunk line-side port (F1) can each be connected via a multichannel port (DIUS, DIUC) to the switching device.

## Revendications

1. Procédé de raccordement d'annuleurs d'écho pour liaisons téléphoniques dans un réseau de télécommunications qui a une pluralité de groupes réseau (10) avec respectivement au moins un noeud grande distance (12) et une pluralité d'équipements de commutation (16) qui sont reliés au noeud grande distance (12) par des lignes de groupes réseau (18), la taille des groupes réseau (10) étant choisie telle que, pour les temps de propagation de signaux qui se présentent au maximum au sein d'un groupe réseau (10), une annulation d'écho n'est pas nécessaire, et les noeuds grande distance (12) de différents groupes réseau (10) étant interconnectés par des lignes grande distance (20), **caractérisé en ce que**, pour décider s'il y a lieu ou non de mettre en circuit un annuleur d'écho (22), une information d'acheminement pour l'établissement d'une liaison et, dans le protocole de signalisation, un indicateur sur l'information sont évalués et **en ce que**, lors de l'établissement d'une liaison téléphonique entre deux groupes réseau (10) dans le noeud grande distance respectif (12) du groupe réseau source et du groupe réseau de destination, un annuleur d'écho (22) est mis en boucle à la liaison.

2. Équipement pour raccorder des annuleurs d'écho pour liaisons téléphoniques dans un réseau de télécommunications qui a une pluralité de groupes réseau (10) avec respectivement au moins un noeud grande distance (12) comprenant un équipement de commutation et une pluralité d'équipements de commutation (16) reliés à celui-ci par des lignes de groupes réseau (18), lesquels sont reliés au noeud grande distance (12) par des lignes de groupes réseau (18), la taille des groupes réseau (10) étant choisie telle que, pour les temps de propagation de signaux qui se présentent au maximum au sein d'un groupe réseau (10), une annulation d'écho n'est pas nécessaire, et les noeuds grande distance (12) de différents groupes réseau (10) étant interconnectés par des lignes grande distance (20), **caractérisé en ce qu'**est affecté à chaque noeud grande distance (12) au moins un annuleur d'écho (22) qui peut être mis en circuit, lors de l'établissement d'une liaison téléphonique entre abonnés (14) dans différents groupes réseau (10), au choix entre un raccordement côté lignes grande distance et un raccordement côté groupes réseau de l'équipement de commutation du noeud grande distance source et du noeud grande distance de destination et **en ce qu'**un équipement de traitement de données est programmé de manière telle, dans le centre de commutation du noeud grande distance, qu'il évalue une information d'acheminement et un indicateur dans le protocole de signalisation sur le type de l'information à transmettre et **en ce qu'**une mise en circuit de l'annuleur d'écho (22) se fait en fonction du résultat de l'évaluation.

3. Équipement selon la revendication 4, **caractérisé en ce que** plusieurs annuleurs d'écho sont regroupés pour constituer un groupe multicanal dont le raccordement côté groupes réseau (F2) et le raccordement côté lignes grande distance (F1) sont chacun connectables à l'équipement de commutation via un raccordement multicanal (DIUS, DIUC).
